# FASCICULE DE BREVET EUROPEEN

(11) **EP 3 025 964 B1**
(45) Date de publication et mention de la délivrance du brevet: **14.06.2017**
(21) Numéro de dépôt: 15194476.6
(22) Date de dépôt: 13.11.2015
(51) Int. Cl.: B64D 31/06, G05D 1/00, F02C 9/42

(54) **ASSISTANCE A LA NAVIGATION D'UN GIRAVION MULTIMOTEUR EN CAS DE PANNE-MOTEUR, DANS LE CADRE D'UN ENTRAINEMENT A VITESSE VARIABLE D'UN ROTOR PRINCIPAL DU GIRAVION**
FLUGASSISTENZSYSTEM EINES MEHRMOTORIGEN DREHFLÜGLERS IM FALLE EINER MOTORPANNE IM RAHMEN EINES HAUPTROTORANTRIEBS MIT VARIABLER GESCHWINDIGKEIT
ASSISTING THE PILOTING OF A MULTI-ENGINED ROTORCRAFT IN AN ENGINE-FAILURE SITUATION, IN THE CONTEXT OF A MAIN ROTOR OF THE ROTORCRAFT BEING DRIVEN AT VARIABLE SPEED

(30) Priorité: 26.11.2014 FR 1402671
(43) Date de publication de la demande: 01.06.2016
(73) Titulaire: Airbus Helicopters, 13725 Marignane Cedex (FR)
(72) Inventeur: VALLART, Jean-Baptiste, 13100 AIX EN PROVENCE (FR); TAHERI, Setareh, 13100 AIX EN PROVENCE (FR); GAVIOS, Damien, 13011 MARSEILLE (FR); ROCHERON, Céline, 13300 SALON DE PROVENCE (FR)
(74) Mandataire: GPI & Associés

(56) Documents cités:
- CA-A1- 2 452 212
- FR-A1- 2 983 319
- FR-A1- 3 004 164
- US-A- 4 831 567

## Description

La présente invention est du domaine de la régulation du fonctionnement des moteurs d'un groupe de motorisation équipant les giravions multimoteur. Ledit groupe de motorisation comprend notamment des moteurs principaux à combustion, turbomoteurs notamment, fournissant classiquement au giravion la puissance mécanique nécessaire au moins à l'entraînement d'un ou de plusieurs rotors équipant le giravion.

La présente invention s'inscrit plus spécifiquement dans le cadre d'une défection de l'un au moins desdits moteurs principaux du giravion procurant l'entraînement en rotation d'au moins un rotor principal du giravion à une vitesse de consigne variable. Le document FR 3004164 divulgue les caractéristiques des préambules des revendications 1 et 12. Le rotor principal d'un giravion procure typiquement au moins la sustentation du giravion, voire aussi, dans le cas spécifique d'un hélicoptère, sa propulsion et/ou son changement d'attitude en vol. Un rotor anti-couple équipant le giravion procure typiquement une stabilisation et un guidage du giravion en lacet et est couramment formé d'un rotor arrière ou d'au moins une hélice propulsive dans le cas d'un giravion à vitesses élevées d'avancement.

Classiquement, le fonctionnement des moteurs principaux du giravion est placé sous le contrôle d'une unité de régulation, telle qu'un FADEC (d'après l'acronyme anglais Full Authority Digital Engine Control). L'unité de régulation contrôle le dosage en carburant des moteurs principaux en fonction des besoins en puissance mécanique du giravion et notamment en fonction des besoins en puissance mécanique nécessaire à l'entraînement du rotor principal à une vitesse de rotation requise identifiée par une consigne de vitesse, dite consigne NR.

Les besoins en puissance mécanique du giravion sont potentiellement identifiés par une unité de commande de vol, telle qu'un AFCS (d'après l'acronyme anglais Automatic Flight Control System). Par exemple, la puissance mécanique requise par le rotor principal peut être identifiée par l'instrumentation de bord du giravion à partir d'une évaluation du couple résistant que le rotor principal oppose à l'encontre de son entraînement par le groupe de motorisation.

Dans ce contexte, le régime courant de fonctionnement du groupe de motorisation est placé sous la dépendance de l'unité de régulation selon différents régimes de régulation identifiés en fonction d'un régime nominal de régulation communément désigné par régime AEO (d'après l'acronyme anglais All Engines Operative).

La régulation du régime de fonctionnement du groupe de motorisation permet d'éviter une détérioration du ou des moteurs principaux sous l'effet d'une exploitation excessive des capacités du groupe de motorisation à fournir la puissance mécanique requise par le giravion. Plusieurs critères de limitation sont pris en compte par l'unité de régulation pour éviter une telle exploitation excessive des capacités du groupe de motorisation. Parmi de tels critères de limitation, on relèvera par exemple :
- un critère de limitation de la vitesse du générateur de gaz du ou des turbomoteurs,
- un critère de limitation de la température de la turbine libre du ou des turbomoteurs entraînée par le générateur des gaz, et
- un critère de limitation de couple de la turbine libre et/ou en entrée d'une boîte principale de transmission de puissance mécanique, sur laquelle boîte principale au moins le ou les rotors sont en prise pour leur entraînement en rotation.

En outre en régime AEO, différents régimes spécifiques de fonctionnement du groupe de motorisation sont habituellement définis en fonction des phases de vol du giravion. Parmi ces régimes de régulation spécifiques en régime AEO, on relèvera notamment :
- un régime PMC (d'après l'acronyme français Puissance Maximum Continue) définissant le régime maximum autorisé en continu du ou des moteurs selon les contraintes imposées par lesdits critères de limitation. Un tel régime PMC est communément utilisé lorsque le giravion évolue en vol de croisière.
- un régime PMD (d'après l'acronyme français Puissance Maximum au Décollage) définissant le régime maximum autorisé du ou des moteurs pouvant être exploité pendant une durée prédéterminée, à titre indicatif de l'ordre de 30 mn (trente minutes), définie suffisante pour permettre le décollage du giravion. Un tel régime PMD est aussi communément utilisé lorsque le giravion évolue en vol stationnaire.
- un régime PMT (d'après l'acronyme français Puissance Maximum Transitoire) définissant le régime maximum autorisé du ou des moteurs pouvant être exploité en phase transitoire de changement de vitesse d'avancement du giravion, notamment en phase d'accélération du giravion. Le régime PMT est utilisé pendant une courte durée, à titre indicatif de l'ordre de la dizaine de secondes voire de l'ordre de la minute.

Dans ce contexte, il se pose le problème d'une défection de l'un des moteurs principaux d'un giravion bimoteur ou de plusieurs moteurs principaux d'un giravion à plus de deux moteurs principaux. En effet dans ce cas, un seul moteur principal du giravion demeure potentiellement opérationnel pour fournir à lui seul la puissance mécanique nécessaire au giravion.

C'est pourquoi il a été défini des régimes spécifiques de régulation du fonctionnement des moteurs principaux en cas de défection de l'un d'entre eux, communément désignés par régimes OEI (d'après l'acronyme anglais One Engine Inoperative).

Les régimes OEI sont appliqués pour réguler le fonctionnement d'un moteur principal fournissant à lui seul la puissance mécanique nécessaire au giravion en vol en cas de défection d'au moins un autre moteur principal d'un giravion multimoteur. Les régimes OEI sont typiquement définis pour des phases de vol spécifiques conformément à une puissance mécanique donnée à fournir pour une période donnée par le moteur principal en évitant sa dégradation au-delà d'un seuil de dégradation toléré. Divers régimes OEI sont potentiellement appliqués par l'unité de régulation, soit automatiquement (par un automate) soit sur requête du pilote du giravion conformément au manuel de vol. Les régimes OEI suivants sont couramment définis :
- régime OEI-très courte durée, selon lequel le ou les moteurs principaux opérationnels sont individuellement aptes à être exploités à un régime d'urgence pour une durée brève de l'ordre de 30 secondes.
- régime OEI-courte durée, selon lequel le ou les moteurs principaux opérationnels sont individuellement aptes à être exploités à un régime d'urgence pour une durée courte de l'ordre de 2 minutes à 3 minutes.
- régime OEI-longue durée, selon lequel le ou les moteurs principaux opérationnels sont individuellement aptes à être exploités à un régime d'urgence défini maximum pour une durée longue, potentiellement illimitée.

Par ailleurs, le giravion est communément équipé d'au moins une unité d'affichage, pour fournir au pilote au moyen d'un écran des informations relatives à l'état de vol du giravion et notamment des informations relatives à l'état de fonctionnement des moteurs.

Une telle unité d'affichage est par exemple du type couramment dénommée FLI (d'après l'acronyme anglais de Flight Limit Indicator).

A partir de données relatives à l'état de fonctionnement des moteurs principaux, prenant notamment en compte au moins lesdits critères de limitation et le régime de régulation courant des moteurs principaux, un écran affiche une information relative à une marge de puissance mécanique, ci-après désignée par marge autorisée, pouvant être exploitée par le pilote sans détériorer le groupe de motorisation. Le pilote génère alors des commandes de vol en évitant de requérir du groupe de motorisation une puissance mécanique excédant ladite marge autorisée.

En ce qui concerne la consigne NR, celle-ci est définie conformément à l'obtention d'une vitesse de rotation du rotor principal, ci-après désignée par vitesse NR, traditionnellement prédéfinie sensiblement invariable.

Dans ce contexte traditionnel, la vitesse NR varie tout au plus dans une plage restreinte de variation de vitesse de l'ordre de 5% d'une vitesse nominale, sans toutefois excéder une variation de l'ordre de 1% par seconde. L'impact d'une telle variation restreinte de la vitesse NR est négligeable sur la variation de la puissance mécanique que doivent fournir les moteurs principaux du giravion pour entraîner le rotor principal.

En effet une défection de l'un des moteurs principaux du giravion provoque une perte brutale de puissance mécanique apte à être fournie par le groupe de motorisation. Par suite d'une telle perte brutale de puissance mécanique il en résulte une baisse de la vitesse NR. Cependant à l'instant de la défection de l'un des moteurs principaux du giravion, la vitesse NR courante est sensiblement égale à la vitesse nominale et est encore suffisante pour permettre au pilote de contrôler aisément l'attitude du giravion.

Par ailleurs selon l'équipement du giravion, un pilote automatique est potentiellement exploité pour rétablir rapidement des conditions de vol sécurisé du giravion en cas de défection de l'un des moteurs principaux, en générant des commandes automatiques de vol modifiant notamment le pas collectif courant des pales du rotor principal pour procurer une sustentation stabilisée du giravion.

Dans sa généralité, un tel pilote automatique équipant potentiellement le giravion est un organe d'assistance automatisée à la navigation générant typiquement des commandes automatiques de vol provoquant une variation collective et/ou cyclique du pas des pales du rotor principal, ainsi que le cas échéant une variation collective du pas des pales dudit au moins un rotor annexe, rotor arrière par exemple.

Classiquement, les commandes automatiques de vol sont générées par le pilote automatique selon des consignes de vol préalablement transmises au pilote automatique par le pilote humain du giravion au moyen de divers organes de commande actionnables par l'homme, tels que notamment des organes de commande manuelle de vol.

Lorsque le pilote automatique est armé, les consignes de vol sont traitées par le pilote automatique pour générer les commandes automatiques de vol conformément à l'application de différents modes de fonctionnement prédéfinis du pilote automatique sélectionnables par le pilote humain pour leur mise en oeuvre.

De tels modes de fonctionnement du pilote automatique comprennent notamment au moins un mode de base procurant une assistance automatisée à la stabilisation en vol du giravion, et/ou des modes supérieurs de fonctionnement procurant un guidage automatisé du giravion.

Dans ce contexte, le pilote automatique applique un mode de fonctionnement donné conformément à la puissance mécanique disponible pouvant être fournie par le groupe de motorisation selon son état de fonctionnement identifié par lesdits critères de limitation et selon le régime de régulation courant appliqué par l'unité de régulation.

Bien entendu dans ce contexte, le pilote automatique dispose des informations fournies par l'instrumentation de bord relatives à l'état de fonctionnement du groupe de motorisation identifié par les critères de limitation. Le pilote automatique génère les commandes automatiques de vol en tenant compte de ladite marge autorisée, y compris en cas de défection de l'un au moins des moteurs principaux, pour éviter une dégradation des moteurs principaux.

Cependant l'évolution des techniques dans le domaine des giravions tend à favoriser un entraînement du rotor principal à une vitesse NR commandée variable par rapport à la vitesse nominale selon les conditions de vol du giravion. Une telle variation significative de la vitesse NR d'entraînement en rotation du rotor principal est par exemple exploitée pour réduire les nuisances sonores du giravion et/ou pour améliorer ses performances dans certaines phases de vol, voire encore pour adapter la vitesse NR en fonction des conditions climatiques et/ou en fonction de la situation dans laquelle se trouve placé le giravion.

A titre indicatif dans ce contexte évolué des techniques selon lequel une variation de la vitesse NR est commandée, la vitesse du rotor principal peut être commandée variable entre 5% et 20% de la vitesse nominale, voire potentiellement davantage selon l'évolution des techniques. A titre indicatif, la vitesse NR est actuellement couramment commandée variable selon une plage de valeurs potentiellement comprise entre 90% et 107% de la vitesse nominale.

On pourra à ce propos se reporter au document XP0000 SHAEFER 1990 « Enhanced energy maneuverability for attack helicopters using continuous variable rotor speed control » (C.G. SCHAEFER Jr ; F.H. LUTZE, Jr) ; 47th forum American Helicopter Society 1991 ; p. 1293-1303. Selon ce document, les performances d'un giravion en situation de combat sont améliorées en faisant varier la vitesse d'entraînement en rotation du rotor principal selon une variation de la vitesse air du giravion.

On pourra aussi se reporter par exemple au document US6198991, qui propose de réduire les nuisances sonores générées par un giravion en approche d'un point de posé en faisant varier la vitesse de rotation du rotor principal.

On pourra encore à ce propos se reporter par exemple au document US2007118254 qui propose de faire varier la vitesse de rotation du rotor principal d'un giravion, selon deux valeurs considérées comme basse et haute, sous conditions prédéfinies de seuils de valeurs de divers paramètres liés à des conditions de vol du giravion préalablement identifiées.

Par exemple encore, on pourra aussi se reporter à ce propos au document WO2010143051 qui propose de faire varier la vitesse de rotation d'un rotor principal équipant un giravion conformément à une cartographie préalablement établie selon diverses conditions de vol du giravion.

Il se pose alors le problème des modalités d'intervention sur le comportement du giravion en cas de défection de l'un des moteurs principaux compte tenu d'un entraînement du rotor principal à une vitesse NR potentiellement basse par rapport à la vitesse nominale, telle que pouvant être au moins inférieure à 7% de la vitesse nominale. En effet dans ce cas, le rétablissement par le pilote d'un entrainement du rotor principal à une vitesse NR conforme à la consigne NR est beaucoup plus délicat à effectuer.

Par suite, il apparaît opportun de procurer au pilote d'un giravion multimoteur une assistance à la navigation pour rétablir rapidement un entraînement du rotor principal en cas de défection de l'un des moteurs principaux à une vitesse NR sécurisant la progression du giravion dans le contexte d'un possible entraînement du rotor principal à une vitesse NR potentiellement basse par rapport à la vitesse nominale à l'instant où intervient ladite défection de l'un des moteurs principaux.

Il est connu un environnement technologique de l'invention appliqué à un giravion monomoteur selon lequel une assistance automatisée est procurée au pilote du giravion pour placer le rotor principal en autorotation en cas de défection du moteur principal.

Une telle assistance est procurée par un dispositif automatique générateur de commandes de vol modifiant, en cas de défection du moteur principal, l'attitude du giravion en verticalité, en tangage, en roulis et/ou en lacet, pour contrebalancer les effets aérodynamiques défavorables qui font immédiatement suite à une défaillance du moteur principal.

On pourra par exemple se reporter à ce propos aux documents GB2192163, US2005135930et US20130221153.

Dans ce contexte, la présente invention a pour objet une méthode d'assistance à la navigation d'un giravion multimoteur en cas, ci-après désigné par cas de panne-moteur, de défection de l'un des moteurs principaux d'un groupe de motorisation du giravion. Il est rappelé que ledit groupe de motorisation fournit la puissance mécanique nécessaire au moins à l'entraînement en rotation d'au moins un rotor principal du giravion procurant au moins la fonction essentielle de sustentation du giravion.

La méthode de la présente invention s'inscrit plus spécifiquement dans le cadre des difficultés liées à un entraînement du rotor principal, hors cas de panne-moteur, à une vitesse NR commandée variable.

Une telle commande de vitesse NR variable est notamment opérée par une unité de commande de vol équipant le giravion pour répondre à des besoins spécifiques, tel que par exemple une réduction des nuisances sonores générées par le giravion en phase d'approche d'un point de posé.

Dans un tel cadre, il est rappelé que la valeur d'une consigne NR générée par ladite unité de commande de vol varie potentiellement dans une plage de valeurs proportionnelles à la valeur d'une vitesse nominale prédéfinie d'entraînement du rotor principal, à titre indicatif compte tenu des techniques actuelles dans une plage de valeurs comprise entre 90% et 107% de la valeur de ladite vitesse nominale.

Il est plus particulièrement visé par la présente invention de procurer au pilote du giravion, par application d'une telle méthode, la faculté de rétablir rapidement et aisément une progression stabilisée du giravion en cas de panne-moteur, notamment dans le cas où ledit cas de panne-moteur intervient alors que la vitesse d'entraînement du rotor principal est potentiellement significativement basse par rapport à ladite vitesse nominale.

La méthode conforme à la présente invention s'inscrit dans le cadre selon lequel le rotor principal, hors cas de panne-moteur, est entraîné par le groupe de motorisation conformément à l'application d'une consigne de vitesse, dite consigne NR. La valeur de la consigne NR est calculée variable par une unité de commande de vol selon les conditions de vol courantes du giravion dans une plage de valeurs de la consigne NR proportionnelles à la valeur d'une vitesse nominale prédéfinie d'entraînement du rotor principal.

Dans ce contexte, l'unité de commande de vol fournit ladite consigne NR à une unité de régulation du fonctionnement individuel des moteurs principaux pour entraîner le rotor principal à une vitesse, dite vitesse NR, conforme à l'application de la consigne NR.

Par ailleurs, l'unité de régulation applique divers régimes de régulation du fonctionnement individuel des moteurs principaux selon l'état de vol courant du giravion.

Selon un état de vol courant du giravion hors cas de panne-moteur, l'unité de régulation applique des premiers régimes de régulation, dits régimes AEO. Les régimes AEO définissent typiquement un régime maximum autorisé des moteurs principaux pendant des durées prédéfinies respectives à chacun des régimes AEO.

Selon un état de vol courant du giravion en cas de panne-moteur, l'unité de régulation applique des deuxièmes régimes de régulation, dits régimes OEI. Les régimes OEI définissent typiquement un régime d'urgence autorisé de l'un au moins des moteurs principaux demeurant opérationnel pendant des durées prédéfinies respectives à chacun des régimes OEI.

Par ailleurs, le giravion est équipé d'une unité, dite unité d'affichage, mettant en oeuvre un écran d'affichage d'au moins une valeur relative à une marge de puissance mécanique autorisée à être exploitée par le pilote, dite marge autorisée.

Tel que précédemment visé, la marge autorisée est classiquement déduite par des moyens de calcul selon au moins le régime de régulation courant des moteurs principaux en tenant compte au moins de critères de limitation identifiant l'état de fonctionnement des moteurs principaux.

Selon la présente invention, une telle méthode d'assistance à la navigation d'un giravion multimoteur est principalement reconnaissable en ce que, hors cas de panne-moteur, la valeur affichée par l'écran relative à la marge autorisée, dite alors marge limitée, est la valeur de la marge autorisée diminuée par le calculateur d'une valeur prédéfinie, dite marge de sécurité.

Ladite diminution est opérée par le calculateur sous condition au moins d'un entraînement du rotor principal à une vitesse NR, qualifiée « basse », commandée par l'unité de commande de vol et identifiée inférieure à un seuil prédéfini de vitesse d'entraînement du rotor principal, dit seuil de vitesse NR.

Selon la méthode de la présente invention en cas de panne-moteur et en cas d'une évolution du giravion, préalablement au cas de panne-moteur, à une vitesse NR d'entraînement du rotor principal inférieure au seuil de vitesse NR, le pilote du giravion dispose d'une réserve de puissance mécanique facilitant son intervention sur le comportement du giravion pour rétablir rapidement le contrôle de sa progression en évitant une chute conséquente du nombre de tours par seconde de rotation du rotor principal.

En effet, hors cas de panne-moteur et sous condition au moins d'une évolution du giravion à une vitesse NR d'entraînement du rotor principal inférieure au seuil de vitesse NR, le pilote du giravion contrôle la puissance mécanique consommée par le giravion selon la valeur de la marge limitée.

Compte tenu du fait que la valeur de la marge limitée est inférieure à la valeur de la marge autorisée, un éventuel déficit de puissance mécanique fournie par le groupe de motorisation en cas de panne moteur est remédié en procurant au pilote du giravion ladite réserve de puissance mécanique issue du contrôle du comportement du giravion par le pilote préalablement au cas de panne-moteur conformément au respect de ladite marge limitée et non pas conformément au respect de ladite marge autorisée tel qu'habituellement.

Il en ressort qu'en cas de panne-moteur, ladite réserve de puissance mécanique est exploitable pour limiter rapidement une brusque chute du nombre de tours de rotation par seconde du rotor principal par suite de la panne-moteur.

Plus particulièrement, il est habituel hors cas de panne-moteur que le pilote exploite les performances optimales du giravion et notamment les capacités optimales du groupe de motorisation pour optimiser la portance fournie par le rotor principal et/ou les performances de propulsion du giravion.

Bien entendu, l'exploitation des capacités optimales du groupe de motorisation hors cas de panne-moteur est conforme aux limites imposées par le régime de régulation AEO courant, et notamment par le régime PMC tel que précédemment défini autorisant en continu une exploitation optimale des capacités du groupe de motorisation.

Dans ce contexte traditionnel en cas de panne-moteur, la puissance mécanique disponible fournie par le groupe de motorisation est brusquement réduite pendant une période de plusieurs secondes durant lesquelles le ou les moteurs principaux demeurant opérationnels montent en puissance.

Le pilote fait alors varier le pas collectif des pales du rotor principal pour atteindre un cas de vol favorable conformément à l'application du régime de régulation OEI courant du moteur principal demeurant opérationnel. Cependant dans un tel contexte, la vitesse NR du rotor principal chute rapidement pendant ladite période de quelques secondes entraînant une perte de hauteur du giravion.

Ladite réserve de puissance mécanique procurée par les dispositions de la présente invention permet de réduire la différence entre la puissance mécanique minimale potentiellement fournie par le groupe de motorisation préalablement au cas de panne-moteur et la puissance mécanique maximale fournie par le groupe de motorisation en cas de panne-moteur, par suite de la montée en puissance du ou des moteurs principaux demeurant opérationnels dont le fonctionnement est régulé conformément à l'application du régime de régulation OEI commandé par l'unité de régulation. Une telle réserve de puissance mécanique permet notamment de limiter la chute du nombre de tours par minute du rotor principal, et donc la vitesse NR minimale d'entraînement en rotation du rotor principal atteinte en cas de panne-moteur.

On relèvera que la valeur de la marge de sécurité est notamment identifiée selon le cas de vol courant du giravion, tel que par exemple comme visé plus loin lors d'une évolution du giravion en phase transitoire d'accélération, hors cas de panne-moteur, au cours de laquelle le fonctionnement des moteurs principaux est régulé conformément à l'application d'un régime de régulation AEO spécifiquement en un mode PMC définissant un régime maximum autorisé en continu des moteurs principaux.

Il ressort finalement des dispositions de la présente invention qu'une sécurisation de la progression du giravion est procurée en cas de panne-moteur intervenant lorsque la vitesse NR d'entraînement du rotor principal est réduite par rapport à la vitesse nominale. Une telle sécurisation de la progression du giravion est procurée au pilote du giravion, indifféremment à un pilote humain ou à un pilote automatique équipant le cas échéant le giravion. En ce qui concerne un pilote humain, ladite sécurisation de la progression du giravion lui procure de surcroît un confort de pilotage pour rétablir aisément une progression sécurisée du giravion.

Pour déduire la marge limitée, le calculateur peut exploiter, tel que connu pour déduire la marge autorisée :
- des premières informations fournies par l'unité de commande de vol et identifiant la puissance mécanique consommée par le giravion,
- des deuxièmes informations fournies par l'instrumentation de bord du giravion identifiant l'état de fonctionnement du groupe de motorisation à partir des valeurs respectives des critères de limitation, et
- des troisièmes informations fournies par l'unité de régulation relatives au régime de régulation courant des moteurs principaux du groupe de motorisation.

Dans ce contexte, le calculateur est potentiellement intégré dans un quelconque organe de calcul du giravion disposant au moins des premières informations, des deuxièmes informations et des troisièmes informations. Un tel organe de calcul est par exemple et notamment l'unité de commande de vol, voire encore l'unité de régulation ou l'unité d'affichage.

Selon des modalités préférées de mise en oeuvre de la méthode de l'invention, ladite diminution de la marge autorisée par la marge de sécurité opérée par le calculateur hors cas de panne-moteur préalablement à l'affichage par l'écran de la valeur de la marge limitée, est placée sous condition d'une régulation AEO des moteurs principaux spécifiquement en un mode PMC définissant un régime maximum autorisé en continu des moteurs principaux.

En effet dans le cas où le giravion est en phase d'ascension proche du sol ou en phase de vol de croisière, le pilote commande couramment une progression du giravion sous régime PMC de régulation des moteurs principaux pour disposer en continu de la puissance mécanique optimale fournie par le groupe de motorisation.

Plus particulièrement en phase d'ascension du giravion proche du sol, la vitesse NR d'entraînement du rotor principal est potentiellement commandée basse par l'unité de commande de vol, afin notamment de réduire les nuisances sonores.

Dans de telles conditions de vol du giravion, le couple résistant alors opposé par le rotor principal à l'encontre de son entraînement par le groupe de motorisation est important, par suite du réglage du pas collectif du rotor principal procurant la sustentation nécessaire au giravion sous condition d'une vitesse NR basse.

C'est pourquoi dans un tel contexte, le pilote souhaite disposer au mieux de la puissance mécanique pouvant être fournie par le groupe de motorisation en exploitant le régime PMC de régulation des moteurs principaux.

Plus particulièrement encore en vol de croisière, le giravion progresse à une vitesse d'avancement importante où la performance du giravion est prépondérante vis-à-vis des nuisances sonores qu'il produit. En conséquence dans une telle phase de vol de croisière du giravion, le pilote souhaite disposer de la puissance mécanique optimale pouvant être fournie par le groupe de motorisation en exploitant le régime PMC de régulation des moteurs principaux permettant de propulser le giravion à des vitesses d'avancement élevées.

Selon une approche générale de la mise en oeuvre de la méthode de la présente invention, la valeur dudit seuil de vitesse NR correspond notamment au plus à la valeur légèrement diminuée de ladite vitesse nominale prédéfinie d'entraînement du rotor principal.

Il est plus spécifiquement préféré la modalité selon laquelle la valeur dudit seuil de vitesse NR est au plus égale à la valeur de ladite vitesse nominale prédéfinie d'entraînement du rotor principal, diminuée d'une valeur comprise entre 2% et 5% de ladite vitesse nominale.

Plus particulièrement dans l'état actuel des techniques, la valeur dudit seuil de vitesse NR correspond de préférence à 97% de ladite vitesse nominale.

Par ailleurs, la valeur de ladite marge de sécurité est de préférence prédéfinie proportionnellement à la limite de puissance imposée par le régime AEO courant. Plus particulièrement dans l'état actuel des techniques, la valeur de ladite marge de sécurité est potentiellement prédéfinie selon une proportion de la limite de puissance mécanique autorisée par le régime AEO courant comprise entre 8% et 25%.

En outre, la valeur de ladite marge de sécurité est potentiellement prédéfinie variable en fonction de la vitesse NR courante. Plus particulièrement, le calcul de la valeur de la marge de sécurité par le calculateur, tel que de préférence proportionnellement à la limite de puissance mécanique autorisée par le régime AEO courant, peut en outre intégrer un coefficient de pondération dont la valeur varie en fonction de la vitesse NR d'entraînement en rotation du rotor principal.

En d'autres termes selon une modalité préférée de la méthode de la présente invention, la valeur de la marge de sécurité est avantageusement calculée d'une part proportionnellement à la limite de puissance mécanique autorisée par le régime AEO courant, en étant en outre d'autre part pondérée en fonction de la vitesse NR courante d'entraînement du rotor principal.

Il ressort de ces dispositions que la valeur calculée de la marge de sécurité est soit majorée dans le cas où la vitesse NR courante d'entraînement en rotation du rotor principal est particulièrement basse ou soit inversement est diminuée dans le cas où la vitesse NR courante d'entraînement du rotor principal est particulièrement haute, bien évidemment en étant néanmoins inférieure à la valeur dudit seuil de vitesse NR.

Il est à noter que dans le contexte où la vitesse NR d'entraînement du rotor principal est classiquement placée sous dépendance de la consigne NR générée par l'unité de commande de vol, la vitesse NR d'entraînement du rotor principal préalablement au cas de panne-moteur peut être déterminée, tel que classiquement, indifféremment isolément ou en combinaison :
- par des moyens de calcul à partir de mesures effectuées par l'instrumentation de bord identifiant la valeur d'un ou de plusieurs paramètres de fonctionnement propres aux organes mécaniques du giravion procurant l'entraînement du rotor principal. De tels moyens de calcul permettent notamment d'identifier le couple résistant opposé par le rotor principal à l'encontre de son entraînement par le groupe de motorisation.
- à partir de la valeur courante de la consigne NR générée par l'unité de commande de vol de laquelle dépend la vitesse NR courante commandée par l'unité de commande de vol.

Il est à relever qu'il est opportun, hors cas de panne-moteur, d'asservir la position d'un organe de commande manuelle de vol à entraînement par l'homme manoeuvrable par un pilote humain pour faire varier le pas des pales du rotor principal. Un tel organe de commande manuelle de vol est notamment dédié à la variation collective du pas des pales du rotor principal, mais peut aussi être un organe de commande manuelle de vol dédié à la variation cyclique du pas des pales du rotor principal.

Dans le contexte de l'invention, un tel asservissement est alors opéré selon la limite de puissance mécanique autorisée par le régime AEO courant diminuée de ladite marge de sécurité.

Un tel organe de commande manuelle de vol peut être constitué d'un manche ou d'une manette manoeuvrant une chaîne à transmission mécanique de mouvements provoquant une variation du pas des pales du rotor principal, ou encore peut être constitué dans le cadre connu d'une commande de vol électrique, d'une manette ou d'un manche à encombrement réduit générateur de signaux électriques exploités par l'unité de commande de vol pour générer des commandes automatisées de vol provoquant une variation du pas des pales du rotor principal.

Plus spécifiquement, la méthode de la présente invention comprend les opérations suivantes hors cas de panne-moteur.

L'unité de commande de vol génère la consigne NR et transmet la consigne NR générée à l'unité de régulation. Par ailleurs, l'unité de régulation applique, hors cas de panne-moteur, un régime AEO selon la phase de vol du giravion et transmet au calculateur le régime AEO appliqué, dit régime AEO courant.

Par ailleurs, l'instrumentation de bord du giravion transmet au calculateur l'état de fonctionnement des moteurs principaux identifié par la valeur des critères de limitation.

Tel que classiquement, la phase de vol du giravion est notamment identifiée selon des informations fournies par l'instrumentation de bord du giravion. De telles informations comprennent notamment des données atmosphériques relatives aux conditions atmosphériques environnant le giravion et des données de vol relatives au cas de vol du giravion et couramment identifiées selon notamment l'état de la mécanique de vol du giravion et/ou selon la hauteur-sol à laquelle évolue le giravion.

Puis, le calculateur identifie d'une part la valeur de ladite marge autorisée par suite de l'application du régime AEO courant et d'autre part ladite marge de sécurité. Par suite, le calculateur déduit et transmet à l'unité d'affichage la valeur de la marge limitée provoquant son affichage par l'écran.

Le pilote du giravion génère alors des commandes de vol pour piloter le giravion conformément au cadre imposé d'une exploitation de la puissance mécanique fournie par le groupe de motorisation selon la valeur de la marge limitée déduite par le calculateur. Dans ce contexte, les commandes de vol générées par le pilote sont notamment des commandes de vol manuelles générées par un pilote humain au vu de la marge de puissance affichée par l'écran. Il est cependant compris que le cas échéant selon l'équipement du giravion, les commandes de vol générées par le pilote peuvent être aussi des commandes automatisées de vol générées automatiquement par un pilote automatique tel que visé plus loin.

Tel que précédemment visé, la position d'un organe de commande manuelle de vol à entraînement par l'homme manoeuvrable par un pilote humain pour provoquer une variation du pas des pales du rotor principal, notamment collectivement, est de préférence asservie par l'unité de commande de vol selon la valeur de la marge limitée.

Dans ce contexte, l'organe de commande manuelle de vol est en outre de préférence équipé d'un appareil générateur de signaux tactiles variant au moins selon la variation de la valeur de la marge limitée.

En outre, le giravion étant équipé d'un pilote automatique, des commandes automatiques de vol, hors cas de panne moteur, sont générées par le pilote automatique armé en tenant compte de la marge limitée sous conditions d'un entraînement du rotor principal à une vitesse NR basse.

Un exemple de réalisation de la présente invention va être décrit en relation avec les figures des planches annexées, dans lesquelles :
- la fig.1 est composée de deux schémas (a) et (b) illustrant par rapport au temps l'évolution, selon l'art antérieur, des évènements essentiels intervenant en cas de panne de l'un des moteurs principaux d'un giravion multimoteur.
- la fig.2 est composée de deux schémas (c) et (d) illustrant par rapport au temps l'évolution, par suite de l'application d'une méthode conforme à la présente invention, des événements essentiels intervenant en cas de panne de l'un des moteurs principaux d'un giravion multimoteur.
- la fig.3 est un schéma illustrant des modalités de mises en oeuvre d'une méthode conforme à la présente invention.
- la fig.4 est composée de plusieurs schémas (e), (f) et (g) illustrant des modalités d'affichage d'informations sur un écran par application d'une méthode conforme à la présente invention, respectivement selon diverses vitesses NR d'entraînement en rotation d'un rotor principal d'un giravion multimoteur.

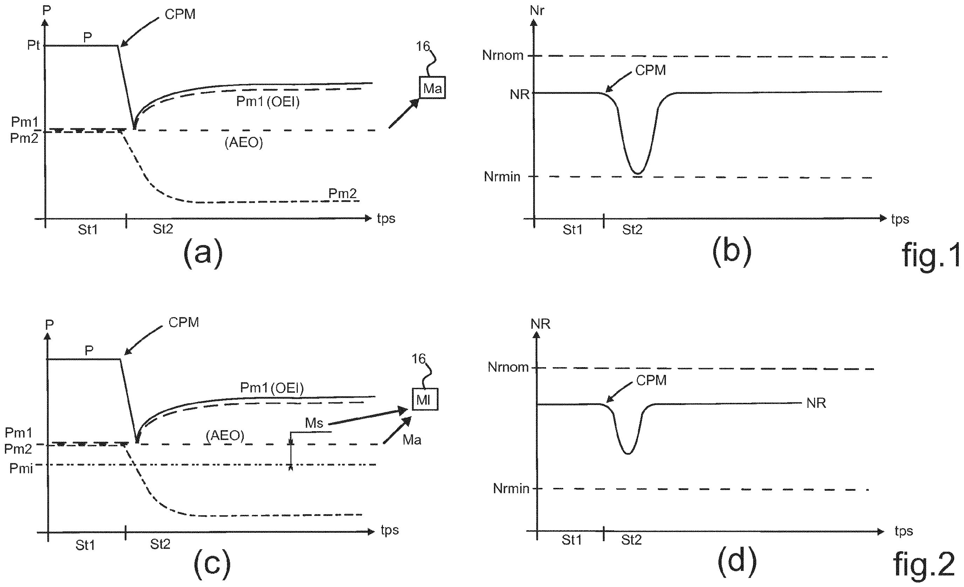

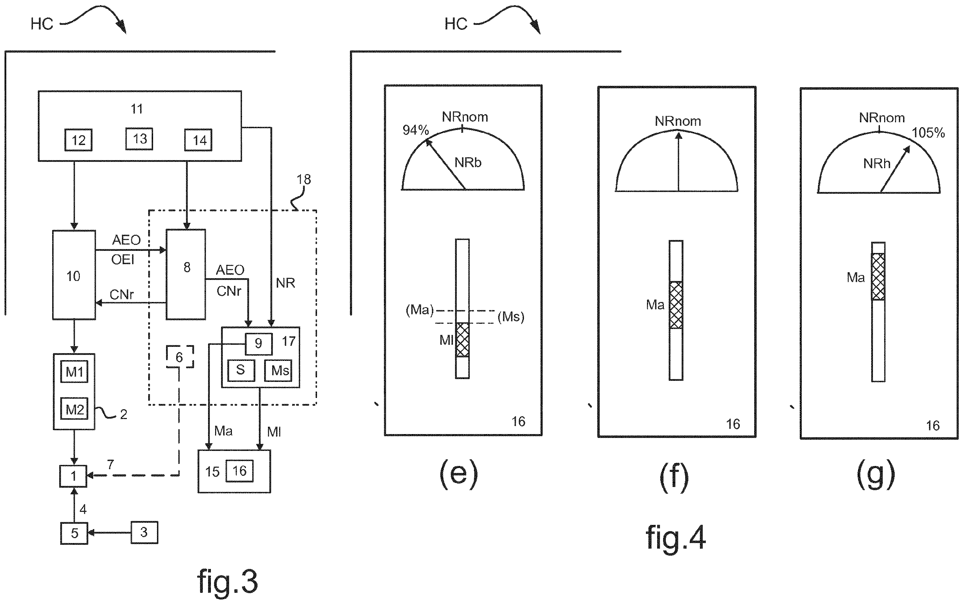

Sur la figure 3, est représenté un giravion multimoteur HC équipé d'un groupe motorisation 2. Sur les fig.1 et fig.2, les événements essentiels intervenant en cas de défection de l'un des moteurs principaux du giravion multimoteur HC sont illustrés, respectivement selon l'art antérieur sur la fig.1 et par application d'une méthode relevant de la présente invention sur la fig.2.

Sur les exemples de réalisation respectivement illustrés sur les fig.1 et fig.2, le giravion HC est plus spécifiquement un giravion bimoteur équipé d'un groupe de motorisation comprenant deux moteurs principaux.

Il est cependant compris que les dispositions de la présente invention sont applicables à un giravion équipé d'un groupe de motorisation comprenant au moins deux moteurs principaux.

De tels moteurs principaux sont notamment des moteurs à combustion, turbomoteurs notamment, fournissant au giravion la puissance mécanique au moins nécessaire à l'entraînement en rotation d'un rotor principal du giravion procurant au moins la fonction essentielle de sustentation du giravion.

Le schéma (a) de la fig.1 et le schéma (c) de la fig.2 illustrent par rapport au temps (tps) l'évolution de la puissance mécanique (P) fournie par les moteurs principaux en cas de défection de l'un des moteurs principaux, dit cas de panne-moteur CPM. Il est à noter que pour illustrer au mieux l'invention, les schémas (a) et (c) illustrent un même cas de panne-moteur CPM intervenant pour des giravions de mêmes capacités de propulsion.

Sur les schémas (a) et (c), il est considéré une même situation St1 selon laquelle l'ensemble des moteurs principaux du giravion sont opérationnels. Dans cette situation St1, Un premier moteur principal fournit une puissance mécanique Pm1 et un deuxième moteur principal fournit une puissance mécanique Pm2, les moteurs principaux du giravion fournissant une même puissance mécanique.

Les fonctionnements respectifs de chacun des moteurs principaux sont classiquement régulés par une unité de régulation selon un régime AEO, tel que notamment un régime PMC selon lequel le giravion dispose alors d'une puissance mécanique optimale en continu.

Conformément à l'application du régime AEO, un pilote du giravion est habituellement autorisé à exploiter une marge de puissance mécanique prédéfinie fournie par le groupe de motorisation, dite marge autorisée Ma. Tel que classiquement, une unité d'affichage permet d'afficher sur un écran 16 une information relative à ladite marge autorisée Ma pour procurer au pilote une assistance à la navigation du giravion.

Dans ce contexte, il est compris que la relation entre l'information affichée par l'écran 16 et ladite marge autorisée Ma n'implique pas une exactitude entre les valeurs respectives de l'information affichée à l'écran et de la marge autorisée Ma, mais une dépendance entre ces valeurs. En effet tel qu'expliqué par la suite hors cas de panne-moteur CPM et par suite de l'application du régime AEO :
- selon l'art antérieur illustré sur la fig.1, l'information affichée par l'écran 16 est la valeur de la marge autorisée Ma, tandis que
- selon l'invention illustrée sur la fig.2, l'information affichée par l'écran 16 est la valeur d'une marge limitée MI égale à la valeur de la marge autorisée Ma minorée d'une marge de sécurité Ms identifiée par un calculateur.

Par ailleurs sur les schémas (b) et (d), le rotor principal est entraîné à une vitesse de rotation, dite vitesse NR, commandée variable par une unité de commande de vol, tel que par exemple pour limiter les nuisances sonores du giravion en phase d'approche d'un point de posé.

La vitesse NR est calculée variable par l'unité de commande de vol proportionnellement à une vitesse nominale NRnom prédéfinie d'entraînement du rotor principal.

Sur l'exemple de réalisation illustré sur les schémas (b) et (d), il est considéré que, dans la situation St1 mentionnée en relation avec les schémas (a) et (c), la vitesse NR est potentiellement commandée inférieure à la vitesse nominale NRrom par l'unité de commande de vol. La vitesse NR est alors qualifiée « basse », tel que par exemple une vitesse NR correspondante à 94% de la vitesse nominale NRnom.

Dans un tel contexte sur les schémas (a) et (b) de la fig.1 ainsi que sur les schémas (c) et (d) de la fig.2, il est considéré une situation St2 en cas de panne-moteur CPM, telle qu'une défection du deuxième moteur principal sur l'exemple de réalisation illustré. Sur les schémas (a) et (c), dans un tel cas de panne-moteur CPM, la puissance mécanique Pm2 fournie par le deuxième moteur chute rapidement.

L'unité de régulation applique alors classiquement un régime OEI de régulation du fonctionnement du premier moteur principal, de sorte que le premier moteur principal fournisse une puissance mécanique Pm1 prédéfinie pour une durée donnée. Dans ce contexte, la puissance mécanique P nécessaire au giravion est fournie par le premier moteur principal demeurant opérationnel.

En cas de panne-moteur, ladite marge autorisée Ma est adaptée et est affichée par l'écran 16, de préférence typiquement tel que selon l'art antérieur selon la puissance mécanique exploitable conformément à l'application du régime OEI courant.

Cependant sur les schémas (b) et (d) en cas de panne-moteur CPM, la vitesse NR d'entraînement du rotor principal chute rapidement, avec pour conséquence de provoquer une brusque perte de hauteur du giravion.

Une intervention rapide du pilote est nécessaire pour faire varier le pas des pales du rotor principal permettant de stopper le plus rapidement possible la chute de la vitesse NR afin de rétablir une progression stabilisée du giravion contrôlée par le pilote.

Tel que précédemment visé, le pilote hors cas de panne-moteur CPM manoeuvre le giravion en exploitant pleinement la marge de puissance mécanique dont la valeur est affichée par l'écran 16.

Sur le schéma (b) de la fig.1 illustrant l'art antérieur, il apparait que la pleine exploitation par le pilote de la marge autorisée Ma affichée par l'écran préalablement au cas de panne moteur CPM, provoque classiquement en cas de panne-moteur CPM une chute conséquente de la vitesse NR. Dans ce contexte, la vitesse NR est proche d'une vitesse NR minimale Nrmin régulée par l'unité de commande. Par suite, le pilote peut être placé en inconfort pour rétablir rapidement une vitesse NR procurant un vol stabilisé du giravion.

Par contre sur le schéma (c) de la fig.2 illustrant l'invention, il est pris en compte, préalablement au cas de panne-moteur CPM et sous condition d'un entraînement du rotor principal à une vitesse NR basse, une puissance mécanique prédéfinie dénommée imposée Pmi.

La valeur de la puissance mécanique imposée Pmi est exploitée pour définir la marge de sécurité Ms en étant prédéfinie inférieure à la valeur de la puissance mécanique fournie par le groupe de motorisation du giravion conformément à l'application du régime AEO courant. Par suite, la valeur de la marge limitée MI affichée par l'écran 16 est déduite en diminuant la valeur de la marge autorisée Ma par la valeur de la marge de sécurité Ms

Dans ce contexte, une réserve de puissance mécanique est procurée pour pallier un éventuel déficit de puissance mécanique en cas de panne-moteur.

En cas de panne-moteur, la chute de la vitesse NR est limitée par suite de la réduction de l'écart entre la puissance mécanique potentiellement minimale fournie par le groupe de motorisation hors cas de panne moteur et la puissance mécanique maximale fournie par le moteur principal demeurant opérationnel et montant en puissance conformément à l'application du régime de régulation OEI.

Par suite une assistance à la navigation est fournie au pilote pour faciliter un rapide rétablissement d'un entraînement du rotor principal à une vitesse NR conforme à la vitesse NR d'entraînement du rotor principal préalablement au cas de panne moteur pour procurer un vol stabilisé du giravion, tel qu'illustré sur le schéma (d) de la fig.2.

Plus particulièrement sur la fig.4 et conformément aux dispositions de la présente invention décrites en relation avec la fig.2, il est illustré un écran 16 d'affichage de la marge de puissance mécanique exploitable par le pilote sous régime AEO de régulation du fonctionnement des moteurs principaux du giravion.

Sur le schéma (e), le rotor principal est entraîné à une vitesse NR basse, par exemple de l'ordre de 94% de la vitesse NRnom. Dans ce cas, la marge limitée MI est d'une valeur inférieure à la marge autorisée Ma, la valeur de la marge autorisée Ma étant diminuée de la marge de sécurité Ms préalablement à son affichage par l'écran 16. Bien entendu sur le schéma (e), la marge autorisée Ma et la marge de sécurité Ms sont mentionnées à titre indicatif mais ne sont pas en réalité affichées à l'écran 16.

Sur le schéma (f), le rotor principal est entraîné à la vitesse NRnom et sur le schéma (g), le rotor principal est entraîné à une vitesse NR qualifiée « haute » supérieure à la vitesse NRnom, par exemple de l'ordre de 105% de la vitesse NRnom. Dans ces deux cas, la valeur de la marge autorisée Ma est affichée par l'écran 16.

Sur la fig.3, des modalités préférées de mise en oeuvre d'une méthode conforme à la présente invention sont illustrées. Le rotor principal 1 d'un giravion multimoteur est entraîné en rotation par un groupe de motorisation 2 du giravion comprenant deux moteurs principaux M1 et M2 sur l'exemple de réalisation illustré.

Tel que classiquement, une variation du pas des pales du rotor principal 1 est régulée par un pilote du giravion au moins collectivement, voire aussi cycliquement, pour modifier le comportement en vol du giravion.

Ladite variation du pas des pales du rotor principal 1 est notamment provoquée par un pilote humain 3 générant des commandes manuelles de vol 4 par l'intermédiaire d'au moins un organe de commande manuelle de vol 5 à entraînement par l'homme. De telles dispositions n'excluent cependant pas, selon l'équipement du giravion, l'exploitation d'un pilote automatique 6 générant des commandes automatiques de vol 7 pour faire varier au moins collectivement le pas des pales du rotor principal 1.

Par ailleurs, les conditions d'exploitation de la puissance mécanique fournie par les moteurs principaux M1 et M2 sont classiquement contrôlées par une unité de régulation 10 appliquant, tel que précédemment visé, des régimes AEO ou des régimes OEI selon l'état de fonctionnement des moteurs principaux M1, M2. La régulation du fonctionnement des moteurs principaux M1, M2 par l'unité de régulation 10 est opérée selon une consigne de vol CNr, dite consigne NR, générée par une unité de commande vol 8 pour entraîner le rotor principal 1 à une vitesse NR souhaitée.

Par ailleurs une instrumentation de bord 11 du giravion est couramment génératrice de diverses données 12, 13, 14 identifiant les conditions de vol du giravion. De telles données 12, 13, 14 comprennent notamment au moins des données atmosphériques 12 relatives aux conditions atmosphériques environnant le giravion, des données de vol 13 relatives au cas de vol du giravion et/ou des données 14 relatives à l'état de fonctionnement des moteurs principaux M1 et M2 du groupe de motorisation 2 identifiées au moins selon des critères de limitation prédéfinis.

Les données 12, 13, 14 fournies par l'instrumentation de bord 11 sont notamment exploitées par l'unité de commande de vol 8 pour commander la variation de la vitesse NR et/ou par l'unité de régulation 10 pour contrôler le régime de fonctionnement des moteurs principaux M1, M2 et par suite pour appliquer un régime AEO ou OEI de régulation du fonctionnement des moteurs principaux M1, M2 adapté à la situation de vol du giravion.

Par ailleurs, le giravion est encore tel que classiquement équipé d'une unité d'affichage 15 comprenant au moins un écran 16 d'affichage d'une information relative à la marge autorisée Ma de puissance mécanique fournie par le groupe de motorisation 2 pouvant être exploitée en fonction du régime courant AEO ou OEI de régulation des moteurs principaux M1 et M2 appliqué par l'unité de régulation 10. Ladite marge autorisée Ma est couramment identifiée par des moyens de calcul 9.

De tels moyens de calcul 9 sont potentiellement intégrés dans un calculateur 17 mis en oeuvre par la méthode de la présente invention. Sur l'exemple préféré de réalisation illustré, le calculateur 17 intègre les moyens de calcul 9 et le calculateur 17, l'unité de commande de vol 8 voire aussi le cas échéant le pilote automatique 6, sont intégrés dans une même unité de calcul 18.

Une donnée de régulation relative au régime AEO appliqué est transmise au calculateur 17 par l'unité de régulation 10. Le calculateur 17 identifie alors la marge de puissance mécanique devant être affichée par l'écran 16, à partir de la marge autorisée Ma identifiée par les moyens de calcul 9 selon le régime AEO ou OEI courant appliqué par l'unité de régulation 10.

Par ailleurs, une information relative à la vitesse NR courante est transmise au calculateur 17.

L'information relative à la vitesse NR courante transmise au calculateur 17 est par exemple la consigne CNr générée par l'unité de commande de vol 8 et/ou une information fournie par l'instrumentation de bord 11 relative à une mesure effectuée par exemple en sortie d'une boîte de transmission principale de puissance mécanique à partir de laquelle est entraîné le rotor principal 1, voire encore par exemple une mesure du couple résistant opposé par le rotor principal 1 à l'encontre de son entraînement par le groupe de motorisation 2.

Tel que précédemment visé en cas de panne-moteur et/ou hors cas de panne-moteur sous condition d'une vitesse NR égale ou supérieure à la vitesse nominale NRnom, la marge autorisée Ma est affichée par l'écran 16. Hors cas de panne-moteur et au moins sous condition d'un entraînement du rotor principal 1 à une vitesse NR basse, le calculateur 17 identifie la marge limitée MI affichée par l'écran 16.

A cet effet, le calculateur 17 compare la vitesse NR courante avec un seuil S prédéfini, dit seuil de vitesse NR. La valeur du seuil S de vitesse NR est prédéfinie au plus égale à la valeur de ladite vitesse nominale NRnom telle que précédemment définie, légèrement diminuée. La notion de « légèrement diminuée » est appréciée comme définissant une valeur du seuil S de vitesse NR au plus proche mais inférieure à la vitesse nominale NRnom. Cependant à titre indicatif, une diminution raisonnable de la valeur de la vitesse nominale NRnom pour définir le seuil S de vitesse NR est comprise entre 2% et 5% de la valeur de la vitesse nominale NRnom.

Par suite de la comparaison opérée par le calculateur 17 entre la vitesse NR courante et le seuil S de vitesse NR, le calculateur 17 identifie la marge limitée MI par application de la règle de diminution de la marge autorisée Ma par la marge de sécurité Ms.

Le calculateur 17 transmet alors à l'unité d'affichage 15 la valeur de la marge limitée Ma provoquant son affichage par l'écran 16.

Subsidiairement dans le cas où le giravion est équipé d'un pilote automatique, le calculateur 17 transmet la marge limitée MI au pilote automatique 6. Dans le cas d'un armement du pilote automatique 6 et hors cas de panne-moteur sous condition d'un entraînement du rotor principal 1 à une vitesse NR basse, les commandes automatiques de vol 7 générées par le pilote automatique 6 pour au moins faire varier le pas collectif des pales du rotor principal 1 prennent alors en compte la marge limitée MI identifiée par le calculateur 17, et non pas la marge autorisée Ma.

## Revendications

1. Méthode d'assistance à la navigation d'un giravion multimoteur en cas, dit cas de panne-moteur (CPM), de défection de l'un des moteurs principaux (M1,M2) d'un groupe de motorisation (2) équipant le giravion, ledit groupe de motorisation (2) fournissant la puissance mécanique nécessaire au moins à l'entraînement en rotation d'au moins un rotor principal (1) du giravion procurant au moins la sustentation du giravion,
le rotor principal (1), hors cas de panne-moteur, étant entraîné par le groupe de motorisation (2) conformément à l'application d'une consigne de vitesse (CNr), dite consigne NR, dont la valeur est calculée variable par une unité de commande de vol (8) selon les conditions de vol courantes du giravion dans une plage de valeurs de la consigne NR proportionnelles à la valeur d'une vitesse nominale (NRnom) prédéfinie d'entraînement du rotor principal (1),
l'unité de commande de vol (8) fournissant ladite consigne NR à une unité de régulation (10) du fonctionnement individuel des moteurs principaux (M1, M2) pour entraîner le rotor principal (1) à une vitesse, dite vitesse NR, conforme à l'application de la consigne NR (CNr), l'unité de régulation (10) appliquant divers régimes de régulation du fonctionnement individuel des moteurs principaux (M1, M2) selon l'état de vol courant du giravion, dont :
- selon un état de vol courant du giravion hors cas de panne-moteur (CPM), des premiers régimes de régulation, dits régimes AEO, définissant un régime maximum autorisé des moteurs principaux (M1, M2) pendant des durées prédéfinies respectives à chacun des régimes AEO,
- selon un état de vol courant du giravion en cas de panne-moteur (CPM), des deuxièmes régimes de régulation, dits régimes OEI, définissant un régime d'urgence autorisé de l'un au moins des moteurs principaux (M1, M2) demeurant opérationnel pendant des durées prédéfinies respectives à chacun des régimes OEI,
- le giravion étant équipé d'une unité, dite unité d'affichage (15), mettant en oeuvre un écran (16) d'affichage d'au moins une valeur relative à une marge de puissance mécanique autorisée à être exploitée par le pilote, dite marge autorisée (Ma), déduite par des moyens de calcul (9) selon au moins le régime de régulation courant des moteurs principaux (M1, M2) en tenant compte au moins de critères de limitation identifiant l'état de fonctionnement des moteurs principaux (M1, M2),
**caractérisée en ce que**, hors cas de panne-moteur (CPM), la valeur affichée par l'écran (16) relative à la marge autorisée (Ma), dite alors marge limitée (MI), est la valeur de la marge autorisée (Ma) diminuée par un calculateur (17) d'une valeur prédéfinie, dite marge de sécurité (Ms), sous condition au moins d'un entraînement du rotor principal (1) à une vitesse NR, qualifiée « basse », commandée par l'unité de commande de vol (8) et identifiée inférieure à un seuil prédéfini de vitesse d'entraînement du rotor principal, dit seuil de vitesse NR (S), de sorte que, en cas de panne-moteur (CPM) et en cas d'une évolution du giravion, préalablement au cas de panne-moteur (CPM), à une vitesse NR d'entraînement du rotor principal (1) inférieure au seuil de vitesse NR (S), le pilote du giravion dispose d'une réserve de puissance mécanique facilitant son intervention sur le comportement du giravion pour rétablir rapidement le contrôle de sa progression en évitant une chute conséquente du nombre de tours par seconde de rotation du rotor principal (1).

2. Méthode selon la revendication 1,
**caractérisée en ce que** ladite diminution de la marge autorisée (Ma) par la marge de sécurité (Ms) opérée hors cas de panne-moteur (CPM) par le calculateur (17) préalablement à l'affichage par l'écran (16) de la valeur de la marge limitée (MI), est placée sous condition d'une régulation des moteurs principaux (M1, M2) spécifiquement en un mode PMC définissant un régime maximum autorisé en continu des moteurs principaux (M1, M2).

3. Méthode selon l'une quelconque des revendications 1 et 2,
**caractérisée en ce que** la valeur dudit seuil de vitesse NR (S) correspond au plus à la valeur légèrement diminuée de ladite vitesse nominale (NRnom) prédéfinie d'entraînement du rotor principal (1).

4. Méthode selon la revendication 3,
**caractérisée en ce que** la valeur dudit seuil de vitesse NR (S) correspond au plus à la valeur de ladite vitesse nominale (NRnom) prédéfinie d'entraînement du rotor principal (1), diminuée d'une valeur comprise entre 2% et 5% de ladite vitesse nominale (NRnom).

5. Méthode selon l'une quelconque des revendications 1 à 4,
**caractérisée en ce que** la valeur de ladite marge de sécurité (Ms) est prédéfinie proportionnellement à la limite de puissance mécanique autorisée par le régime AEO courant.

6. Méthode selon la revendication 5,
**caractérisée en ce que** la valeur de ladite marge de sécurité (Ms) est prédéfinie selon une proportion de la limite de puissance mécanique autorisée par le régime AEO courant comprise entre 8% et 25%.

7. Méthode selon l'une quelconque des revendications 1 à 6,
**caractérisée en ce que** la valeur de ladite marge de sécurité (Ms) est prédéfinie variable en fonction de la vitesse NR courante.

8. Méthode selon l'une quelconque des revendications 1 à 7, **caractérisée en ce que** la méthode comprend les opérations suivantes hors cas de panne-moteur (CPM) :
- génération de la consigne NR par l'unité de commande de vol (8) et transmission de la consigne NR générée à l'unité de régulation (10),
- application par l'unité de régulation (10), hors cas de panne-moteur (CPM), d'un régime AEO selon la phase de vol du giravion,
- transmission au calculateur (17) d'une part par l'unité de régulation (10) du régime AEO appliqué, dit régime AEO courant, et d'autre part par l'instrumentation de bord (11) du giravion de l'état de fonctionnement des moteurs principaux (M1, M2) identifié en fonction de la valeur des critères de limitation, puis
- identification par le calculateur (17) d'une part de la valeur de ladite marge autorisée (Ma) par suite de l'application du régime AEO courant et d'autre part de ladite marge de sécurité (Ms), puis déduction par le calculateur (17) de la valeur de ladite marge limitée (MI) et transmission à l'unité d'affichage (15) par le calculateur (17) de la valeur de ladite marge limitée (MI) provoquant son affichage par l'écran (16),
- génération par le pilote du giravion de commandes de vol conformément à une exploitation de la puissance mécanique fournie par le groupe de motorisation (2) selon la valeur de la marge limitée (MI) déduite par le calculateur (17).

9. Méthode selon l'une quelconque des revendications 1 à 8,
**caractérisée en ce que** la position d'un organe de commande manuelle de vol (5) à entraînement par l'homme manoeuvrable par un pilote humain pour provoquer une variation du pas des pales du rotor principal (1) est asservie par l'unité de commande de vol (8) selon la valeur de la marge limitée (MI).

10. Méthode selon la revendication 9,
**caractérisée en ce que** l'organe de commande manuelle de vol (5) est équipé d'un appareil générateur de signaux tactiles variant au moins selon la variation de la valeur de la marge limitée (MI).

11. Méthode selon l'une quelconque des revendications 1 à 10,
**caractérisée en ce que** le giravion étant équipé d'un pilote automatique (6), des commandes automatiques de vol (7) sont, hors cas de panne moteur (CPM), générées par le pilote automatique (6) armé en tenant compte de la marge limitée (MI) sous condition d'un entraînement du rotor principal (1) à une vitesse NR basse.

12. Giravion (HC) multimoteur comportant un groupe de motorisation (2) équipé de moteurs principaux (M1, M2) ; le giravion multimoteur mettant en oeuvre une assistance à la navigation d'un giravion multimoteur en cas de panne-moteur (CPM) avec une défection de l'un des moteurs principaux (M1, M2) d'un groupe de motorisation (2) équipant le giravion, le groupe de motorisation (2) fournissant la puissance mécanique nécessaire au moins à l'entraînement en rotation d'au moins un rotor principal (1) du giravion procurant au moins la sustentation du giravion,
le rotor principal (1), hors cas de panne-moteur, étant entraîné par le groupe de motorisation (2) conformément à l'application d'une consigne de vitesse (CNr), dite consigne NR, dont la valeur est calculée variable par une unité de commande de vol (8) selon les conditions de vol courantes du giravion dans une plage de valeurs de la consigne NR proportionnelles à la valeur d'une vitesse nominale (NRnom) prédéfinie d'entraînement du rotor principal (1),
l'unité de commande de vol (8) fournissant ladite consigne NR à une unité de régulation (10) du fonctionnement individuel des moteurs principaux (M1, M2) pour entraîner le rotor principal (1) à une vitesse, dite vitesse NR, conforme à l'application de la consigne NR (CNr), l'unité de régulation (10) appliquant divers régimes de régulation du fonctionnement individuel des moteurs principaux (M1, M2) selon l'état de vol courant du giravion, dont :
- selon un état de vol courant du giravion hors cas de pannemoteur (CPM), des premiers régimes de régulation, dits régimes AEO, définissant un régime maximum autorisé des moteurs principaux (M1, M2) pendant des durées prédéfinies respectives à chacun des régimes AEO,
- selon un état de vol courant du giravion en cas de panne-moteur (CPM), des deuxièmes régimes de régulation, dits régimes OEI, définissant un régime d'urgence autorisé de l'un au moins des moteurs principaux (M1, M2) demeurant opérationnel pendant des durées prédéfinies respectives à chacun des régimes OEI,
- le giravion étant équipé d'une unité, dite unité d'affichage (15), mettant en oeuvre un écran (16) d'affichage d'au moins une valeur relative à une marge de puissance mécanique autorisée à être exploitée par le pilote, dite marge autorisée (Ma), déduite par des moyens de calcul (9) selon au moins le régime de régulation courant des moteurs principaux (M1, M2) en tenant compte au moins de critères de limitation identifiant l'état de fonctionnement des moteurs principaux (M1, M2),
**caractérisé en ce que**, hors cas de panne-moteur (CPM), la valeur affichée par l'écran (16) relative à la marge autorisée (Ma), dite alors marge limitée (MI), est la valeur de la marge autorisée (Ma) diminuée par un calculateur (17) d'une valeur prédéfinie, dite marge de sécurité (Ms), sous condition au moins d'un entraînement du rotor principal (1) à une vitesse NR, qualifiée « basse », commandée par l'unité de commande de vol (8) et identifiée inférieure à un seuil prédéfini de vitesse d'entraînement du rotor principal, dit seuil de vitesse NR (S), de sorte que, en cas de panne-moteur (CPM) et en cas d'une évolution du giravion, préalablement au cas de panne-moteur (CPM), à une vitesse NR d'entraînement du rotor principal (1) inférieure au seuil de vitesse NR (S), le pilote du giravion dispose d'une réserve de puissance mécanique facilitant son intervention sur le comportement du giravion pour rétablir rapidement le contrôle de sa progression en évitant une chute conséquente du nombre de tours par seconde de rotation du rotor principal (1).

## Patentansprüche

1. Navigationsunterstützungsverfahren für ein mehrmotoriges Drehflügelflugzeug im Falle eines Motorausfall (CPM) genannten Ausfalls eines der Hauptmotoren (M1, M2) eines Antriebsaggregats (2), mit dem das Drehflügelflugzeug ausgerüstet ist, wobei das Antriebsaggregat (2) die mindestens für den Drehantrieb mindestens eines Hauptrotors (1) des Drehflügelflugzeugs, der mindestens den Auftrieb des Drehflügelflugzeugs liefert, notwendige mechanische Leistung liefert,
wobei der Hauptrotor (1), außer im Falle eines Motorausfalls, von dem Antriebsaggregat (2) gemäß der Anwendung eines Sollwert genannten Drehzahl-Sollwerts (CNr) angetrieben wird, dessen Wert durch eine Flugsteuerungseinheit (8) gemäß den aktuellen Flugbedingungen des Drehflügelflugzeugs in einem Bereich von Sollwerten NR, die proportional zu dem Wert einer vordefinierten nominalen Drehzahl (NRnom) des Hauptrotors (1) sind, variabel berechnet wird,
wobei die Flugsteuerungseinheit (8) den Sollwert NR an eine Einheit (10) der individuellen Betriebsregelung der Hauptrotoren (M1, M2) liefert, um den Hauptrotor (1) mit einer Drehzahl NR genannten Drehzahl gemäß der Anwendung des Sollwertes NR(CNr) anzutreiben, wobei die Regeleinheit (10) verschiedene Betriebsarten zur Regelung des individuellen Betriebs der Hauptmotoren (M1, M2) gemäß dem aktuellen Flugzustand des Drehflügelflugzeugs anwendet, darunter:
- in einem aktuellen Flugzustand des Drehflügelflugzeugs, außer bei einem Motorausfall (CPM), erste AEO-Betriebsarten genannte Regelungsbetriebsarten, die eine maximale zulässige Betriebsart der Hauptmotoren (M1, M2) während jeweils vordefinierten Zeitdauern für jede der AEO-Betriebsarten definieren,
- in einem aktuellen Flugzustand des Drehflügelflugzeugs, im Falle eines Motorausfalls (CPM), zweite, OEI-Betriebsarten genannte Regelungsbetriebsarten, die eine zulässige Notbetriebsart mindestens eines der Hauptmotoren (M1, M2), der während jeweiligen vordefinierten Zeitdauern betriebsfähig bleibt, für jede der OEI-Betriebsarten definieren,
- wobei das Drehflügelflugzeug mit einer Anzeigeeinheit (15) genannten Einheit versehen ist, mit einem Bildschirm (16) zur Anzeige mindestens eines Wertes bezüglich eines zugelassener Spielraum (Ma) genannten Spielraums mechanischer Leistung, der von dem Piloten ausgenutzt werden darf, der von Rechenmitteln (9) gemäß der aktuellen Regelungsbetriebsart der Hauptmotoren (M1, M2) hergeleitet wird, unter Berücksichtigung von mindestens Begrenzungskriterien, die den Betriebszustand der Hauptmotoren (M1, M2) berücksichtigen,
**dadurch gekennzeichnet, dass**, außer im Fall eines Motorausfalls (CPM), der auf dem Bildschirm (16) angezeigte Wert bezüglich des zugelassenen Spielraums (Ma), begrenzter Spielraum (MI) genannt, der Wert des zugelassenen Spielraums (Ma) ist, der von einem Rechner (17) um einen vordefinierten Wert, Sicherheitsspielraum (Ms) genannt, vermindert wird, unter der Bedingung mindestens eines Antriebs des Hauptrotors (1) mit einer "niedrig" eingestuften Drehzahl NR, die von der Flugsteuerungseinheit (8) gesteuert wird und kleiner als ein vordefinierter Schwellenwert der Antriebsdrehzahl des Hauptrotors ist, genannt Drehzahl-Schwellenwert NR (S), derart, dass bei einem Motorausfall (CPM) und bei einer Vortriebsgeschwindigkeit des Drehflügelflugzeugs vor dem Motorausfall (CPM) bei einer Antriebsdrehzahl NR des Hauptrotors (1), die kleiner als der Drehzahl-Schwellenwert NR (S) ist, der Pilot des Drehflügelflugzeugs über eine mechanische Leistungsreserve verfügt, die dessen Eingriff in das Flugverhalten des Drehflügelflugzeugs erleichtert, um schnell die Flugkontrolle zurückzugewinnen unter Vermeidung eines daraus folgenden Abfalls der Drehzahl pro Sekunde des Hauptrotors (1).

2. Verfahren nach Anspruch 1,
**dadurch gekennzeichnet, dass** die Verminderung des zugelassenen Spielraums (Ma) durch den Sicherheitsspielraum (Ms), die, außer im Falle eines Motorausfalls (CPM), durch den Rechner (17) vor der Anzeige des Wertes des begrenzten Spielraums (MI) auf dem Bildschirm (16) durchgeführt wird, von einer Regelung der Hauptmotoren (M1, M2) ausgeführt wird, insbesondere in einem PMC-Modus, der eine maximale Betriebsart definiert, die für die Hauptmotoren (M1, M2) kontinuierlich zugelassen wird.

3. Verfahren nach einem der Ansprüche 1 und 2,
**dadurch gekennzeichnet, dass** der Wert des Drehzahl-Schwellenwerts NR (S) höchstens dem leicht verminderten Wert der vorbestimmten Nominaldrehzahl des Hauptrotors (1) entspricht.

4. Verfahren nach Anspruch 3,
**dadurch gekennzeichnet, dass** der Wert des Drehzahl-Schwellenwerts NR (S) höchstens dem Wert der vordefinierten Nominaldrehzahl (NRnom) des Hauptrotos (1), vermindert um einen Wert zwischen 2% und 5% der Nominaldrehzahl (NRnom), entspricht.

5. Verfahren nach einem der Ansprüche 1 bis 4,
**dadurch gekennzeichnet, dass** der Wert des Sicherheitsspielraums (Ms) proportional zu dem Grenzwert der von der aktuellen AEO-Betriebsart zugelassenen mechanischen Leistung vordefiniert ist.

6. Verfahren nach Anspruch 5,
**dadurch gekennzeichnet, dass** der Wert des Sicherheitsspielraums (Ms) zwischen 8% und 25% vordefiniert ist gemäß einem Größenverhältnis des Grenzwertes des von der aktuellen AEO-Betriebsart zugelassenen mechanischen Leistungsgrenze.

7. Verfahren nach einem der Ansprüche 1 bis 6,
**dadurch gekennzeichnet, dass** der Wert des Sicherheitsspielraums (Ms) variabel in Abhängigkeit von der aktuellen Drehzahl NR vordefiniert ist.

8. Verfahren nach einem der Ansprüche 1 bis 7,
**dadurch gekennzeichnet, dass** das Verfahren, außer im Falle eines Motorausfalls (CPM), folgende Schritte aufweist:
- Erzeugen eines Sollwertes NR durch die Flugsteuerungseinheit (8) und Übertragen des erzeugten Sollwertes NR an die Regeleinheit (10),
- Anwenden einer AEO-Betriebsart je nach Flugphase des Drehflügelflugzeugs durch die Regeleinheit (10), außer im Fall eines Motorausfalls (CPM),
- Übertragen des Betriebszustands der Hauptmotoren (M1, M2), festgestellt in Abhängigkeit von dem Wert der Begrenzungskriterien an den Rechner (17), einerseits durch die Regeleinheit (10) der angewandten AEO-Betriebsart, genannt aktuelle AEO-Betriebsart, und andererseits durch die Bordinstrumentierung (11) des Drehflügelflugzeugs, und dann
- Feststellen durch den Rechner (17) einerseits des Wertes des zugelassenen Spielraums (Ma) infolge der Anwendung der aktuellen AEO-Betriebsart, und andererseits des Sicherheitsspielraums (Ms), anschließend Herleitung des Wertes des begrenzten Spielraums (MI) durch den Rechner (17) und Übertragen des Wertes des begrenzten Spielraums (MI) an die Anzeigeeinheit (15) durch den Rechner (17), was dessen Anzeige auf dem Bildschirm (16) bewirkt,
- Erzeugen von Steuerbefehlen durch den Piloten des Drehflügelflugzeugs in Übereinstimmung mit einer Nutzung der mechanischen Leistung, die von dem Antriebsaggregat (2) geliefert wird gemäß dem Wert des begrenzten Spielraums (MI), der von dem Rechner (17) hergeleitet wurde.

9. Verfahren nach einem der Ansprüche 1 bis 8,
**dadurch gekennzeichnet, dass** die Stellung eines manuellen Flugsteuerungselements (5), welches vom Menschen geführt wird und von einem menschlichen Piloten steuerbar ist, um eine Änderung des Verstellwinkels der Rotorblätter des Hauptrotors (1) zu bewirken, durch die Flugsteuerungseinheit (8) gemäß dem Wert des begrenzten Spielraums (MI) gesteuert wird.

10. Verfahren nach Anspruch 9,
**dadurch gekennzeichnet, dass** das manuelle Flugsteuerungselement (5) mit einem Gerät ausgerüstet ist, das taktile Signale erzeugt, die sich mindestens entsprechend der Änderung des Wertes des begrenzten Spielraums (MI) ändern.

11. Verfahren nach einem der Ansprüche 1 bis 10,
**dadurch gekennzeichnet, dass** das Drehflügelflugzeug mit einem Autopiloten (6) ausgerüstet ist, wobei die automatischen Flugbefehle (7), außer im Falle eines Motorausfalls (CPM), von dem Autopiloten (6) ausgeführt werden unter Berücksichtigung des begrenzten Spielraums (MI), unter der Bedingung eines Antriebs des Hauptrotors (1) mit einer niedrigen Drehzahl NR.

12. Mehrmotoriges Drehflügelflugzeug (HC) mit einem Antriebsaggregat (2), das mit Hauptmotoren (M1, M2) ausgerüstet ist, wobei das mehrmotorige Drehflügelflugzeug eine Navigationsunterstützung eines mehrmotorigen Drehflügelflugzeugs im Falle eines Motorausfalls (CPM) mit einem Ausfall eines der Hauptmotoren (M1, M2) eines Antriebsaggregats (2), mit dem das Drehflügelflugzeug ausgerüstet ist, ausführt, wobei das Antriebsaggregat (2) die mechanische Leistung liefert, die mindestens für einen Drehantrieb mindestens eines Hauptrotors (1) des Drehflügelflugzeugs, der mindestens den Auftrieb des Drehflügelflugzeugs bewirkt, erforderlich ist, wobei der Hauptrotor (1), außer im Falle eines Motorausfalls, von dem Antriebsaggregat (2) gemäß der Anwendung eines Sollwert genannten Drehzahl-Sollwerts (CNr) angetrieben wird, dessen Wert durch eine Flugsteuerungseinheit (8) gemäß den aktuellen Flugbedingungen des Drehflügelflugzeugs in einem Bereich von Sollwerten NR, die proportional zu dem Wert einer vordefinierten nominalen Drehzahl (NRnom) des Hauptrotors (1) sind, variabel berechnet wird,
wobei die Flugsteuerungseinheit (8) den Sollwert NR an eine Einheit (10) der individuellen Betriebsregelung der Hauptrotoren (M1, M2) liefert, um den Hauptrotor (1) mit einer Drehzahl NR genannten Drehzahl gemäß der Anwendung des Sollwertes NR(CNr) anzutreiben, wobei die Regeleinheit (10) verschiedene Betriebsarten zur Regelung des individuellen Betriebs der Hauptmotoren (M1, M2) gemäß dem aktuellen Flugzustand des Drehflügelflugzeugs anwendet, darunter:
- in einem aktuellen Flugzustand des Drehflügelflugzeugs, außer bei einem Motorausfall (CPM) erste AEO-Betriebsarten genannte Regelungsbetriebsarten, die eine maximale zulässige Betriebsart der Hauptmotoren (M1, M2) während jeweils vordefinierten Zeitdauern für jede der AEO-Betriebsarten definieren,
- in einem aktuellen Flugzustand des Drehflügelflugzeugs im Falle eines Motorausfalls (CPM) zweite, OEI-Betriebsarten genannte Regelungsbetriebsarten, die eine zulässige Notbetriebsart mindestens eines der Hauptmotoren (M1, M2), der während jeweiligen vordefinierten Zeitdauern betriebsfähig bleibt, für jede der OEI-Betriebsarten definieren,
- wobei das Drehflügelflugzeug mit einer Anzeigeeinheit (15) genannten Einheit versehen ist, mit einem Bildschirm (16) zur Anzeige mindestens eines Wertes bezüglich eines zugelassener Spielraum (Ma) genannten Spielraums mechanischer Leistung, der von dem Piloten ausgenutzt werden darf, der von Rechenmitteln (9) gemäß der aktuellen Regelungsbetriebsart der Hauptmotoren (M1, M2) hergeleitet wird, unter Berücksichtigung von mindestens Begrenzungskriterien, die den Betriebszustand der Hauptmotoren (M1, M2) berücksichtigen,
**dadurch gekennzeichnet, dass**, außer im Fall eines Motorausfalls (CPM), der auf dem Bildschirm (16) angezeigte Wert bezüglich des zugelassenen Spielraums (Ma), begrenzter Spielraum (MI) genannt, der Wert des zugelassenen Spielraums (Ma) ist, der von einem Rechner (17) um einen vordefinierten Wert, Sicherheitsspielraum (Ms) genannt, vermindert wird, unter der Bedingung mindestens eines Antriebs des Hauptrotors (1) mit einer "niedrig" eingestuften Drehzahl NR, die von der Flugsteuerungseinheit (8) gesteuert wird, und kleiner als ein vordefinierter Schwellenwert der Antriebsdrehzahl des Hauptrotors ist, genannt Drehzahl-Schwellenwert NR (S), derart, dass bei einem Motorausfall (CPM) und bei einer Vortriebsgeschwindigkeit des Drehflügelflugzeugs vor dem Motorausfall (CPM) bei einer Antriebsdrehzahl NR des Hauptrotors (1), die kleiner als der Drehzahl-Schwellenwert NR (S) ist, der Pilot des Drehflügelflugzeugs über eine mechanische Leistungsreserve verfügt, die dessen Eingriff in das Flugverhalten des Drehflügelflugzeugs erleichtert, um schnell die Flugkontrolle zurückzugewinnen unter Vermeidung eines daraus folgenden Abfalls der Drehzahl pro Sekunde des Hauptrotors (1).

## Claims

1. Method of assistance with the navigation of a multi-engine rotorcraft in the event, called the engine failure event (CPM), of failure of one of the main engines (M1, M2) of a power plant (2) fitted to the rotorcraft, said power plant (2) delivering the mechanical power required at least for driving in rotation at least one main rotor (1) of the rotorcraft providing at least the lift of the rotorcraft,
the main rotor (1), outside the engine failure event, being driven by the power plant (2) in accordance with the application of a speed setpoint (CNr), called the NR setpoint, the value of which is calculated variable by a flight control unit (8) according to the current flight conditions of the rotorcraft in a range of NR setpoint values proportional to the value of a predefined nominal speed (NRnom) for driving the main rotor (1),
the flight control unit (8) supplying said NR setpoint to a regulation unit (10) for regulating the individual operation of the main engines (M1, M2) for driving the main rotor (1) at a speed, called the NR speed, in accordance with the application of the NR setpoint (CNr), the regulation unit (10) applying various regulation ratings of the individual operation of the main engines (M1, M2) according to the current flight state of the rotorcraft, including:
- according to a current flight state of the rotorcraft outside the engine failure event (CPM), first regulation ratings, called AEO ratings, defining a maximum authorized rating of the main engines (M1, M2) for respective predefined durations at each of the AEO ratings,
- according to a current flight state of the rotorcraft in the engine failure event (CPM), second regulation ratings, called OEI ratings, defining an emergency rating authorized for at least one of the main engines (M1, M2) remaining operational for respective predefined durations at each of the OEI ratings,
- the rotorcraft being fitted with a unit, called a display unit (15), using a display screen (16) for displaying at least one value relating to a mechanical power margin authorized for use by the pilot, called the authorized margin (Ma), deduced by calculation means (9) according to at least the current regulation rating of the main engines (M1, M2) while taking account at least of limit criteria identifying the operating state of the main engines (M1, M2),
**characterized in that**, outside the engine failure event (CPM), the value displayed by the screen (16) relating to the authorized margin (Ma), then called the limited margin (Ml), is the value of the authorized margin (Ma) reduced by a computer (17) by a predefined value, called the safety margin (Ms), on condition at least of a driving of the main rotor (1) at an NR speed, referred to as "low", controlled by the flight control unit (8) and identified below a predefined speed threshold for driving the main rotor, called the NR speed threshold (S), such that, in the engine failure event (CPM) and in the event of manoeuvring of the rotorcraft, prior to the engine failure event (CPM), at a drive NR speed of the main rotor (1) below the NR speed threshold (S), the pilot of the rotorcraft has a mechanical power reserve making it easier for the pilot to take action on the behaviour of the rotorcraft in order to re-establish control quickly over its progress, while avoiding any significant drop in the number of revolutions per second of rotation of the main rotor (1).

2. Method according to claim 1,
**characterized in that** said reduction of the authorized margin (Ma) by the safety margin (Ms) performed outside the engine failure event (CPM) by the computer (17) prior to the displaying by the screen (16) of the value of the limited margin (Ml), is conditional on the main engines (M1, M2) being regulated specifically in a PMC mode defining a maximum authorized continuous rating of the main engines (M1, M2).

3. Method according to any one of claims 1 and 2,
**characterized in that** the value of said NR speed threshold (S) corresponds at most to the slightly reduced value of said predefined nominal speed (NRnom) for driving the main rotor (1).

4. Method according to claim 3,
**characterized in that** the value of said NR speed threshold (S) corresponds at most to the value of said predefined nominal speed (NRnom) for driving the main rotor (1), reduced by a value comprised between 2% and 5% of said nominal speed (NRnom).

5. Method according to any one of claims 1 to 4,
**characterized in that** the value of said safety margin (Ms) is predefined proportionally to the mechanical power limit authorized by the current AEO rating.

6. Method according to claim 5,
**characterized in that** the value of said safety margin (Ms) is predefined according to a proportion of the mechanical power limit authorized by the current AEO rating comprised between 8% and 25%.

7. Method according to any one of claims 1 to 6,
**characterized in that** the value of said safety margin (Ms) is predefined variable as a function of the current NR speed.

8. Method according to any one of claims 1 to 7,
**characterized in that** the method comprises the following operations outside the engine failure event (CPM):
- generation of the NR setpoint by the flight control unit (8) and transmission of the generated NR setpoint to the regulation unit (10),
- application by the regulation unit (10), outside the engine failure event (CPM), of an AEO rating according to the phase of flight of the rotorcraft,
- transmission to the computer (17) on the one hand by regulation unit (10) of the applied AEO rating, called the current AEO rating, and on the other hand by the on-board instrumentation (11) of the rotorcraft of the operating state of the main engines (M1, M2) identified as a function of the value of the limit criteria, and then
- identification by the computer (17) on the one hand of the value of said authorized margin (Ma) as a result of the application of the current AEO rating, and on the other hand of said safety margin (Ms), and then deduction by the computer (17) of the value of said limited margin (Ml) and transmission to the display unit (15) by the computer (17) of the value of said limited margin (Ml) causing its display by the screen (16),
- generation by the pilot of the rotorcraft of flight controls in accordance with a utilization of the mechanical power delivered by the power plant (2) according to the value of the limited margin (Ml) deduced by the computer (17).

9. Method according to any one of claims 1 to 8,
**characterized in that** the position of a human-driven manual flight control member (5) operable by a human pilot to cause a variation the pitch of the blades of the main rotor (1) is servo-controlled by the flight control unit (8) according to the value of the limited margin (Ml).

10. Method according to claim 9,
**characterized in that** the manual flight control member (5) is fitted with an apparatus generating tactile signals varying at least according to the variation of the value of the limited margin (M1).

11. Method according to any one of claims 1 to 10,
**characterized in that** the rotorcraft being fitted with an autopilot (6), automatic flight controls (7) are, outside the engine failure event (CPM), generated by the autopilot (6) when activated, taking account of the limited margin (Ml) on condition that the main rotor (1) is driven at a low NR speed.

12. Multi-engine rotorcraft (HC) comprising a power plant (2) fitted with main engines (M1, M2); the multi-engine rotorcraft implementing an assistance with the navigation of a multiengine rotorcraft in the engine failure event (CPM) with a failure of one of the main engines (M1, M2) of a power plant (2) fitted to the rotorcraft, the power plant (2) delivering the mechanical power required at least for driving in rotation at least one main rotor (1) of the rotorcraft providing at least the lift of the rotorcraft,
the main rotor (1), outside the engine failure event, being driven by the power plant (2) in accordance with the application of a speed setpoint (CNr), called the NR setpoint, the value of which is calculated variable by a flight control unit (8) according to the current flight conditions of the rotorcraft in a range of NR setpoint values proportional to the value of a predefined nominal speed (NRnom) for driving the main rotor (1),
the flight control unit (8) supplying said NR setpoint to a regulation unit (10) for regulating the individual operation of the main engines (M1, M2) for driving the main rotor (1) at a speed, called the NR speed, in accordance with the application of the NR setpoint (CNr), the regulation unit (10) applying various regulation ratings of the individual operation of the main engines (M1, M2) according to the current flight state of the rotorcraft, including:
- according to a current flight state of the rotorcraft outside the engine failure event (CPM), first regulation ratings, called AEO ratings, defining a maximum authorized rating of the main engines (M1, M2) for respective predefined durations at each of the AEO ratings,
- according to a current flight state of the rotorcraft in the engine failure event (CPM), second regulation ratings, called OEI ratings, defining an emergency rating authorized for at least one of the main engines (M1, M2) remaining operational for respective predefined durations at each of the OEI ratings,
- the rotorcraft being fitted with a unit, called a display unit (15), using a display screen (16) for displaying at least one value relating to a mechanical power margin authorized for use by the pilot, called the authorized margin (Ma), deduced by calculation means (9) according to at least the current regulation rating of the main engines (M1, M2) while taking account at least of limit criteria identifying the operating state of the main engines (M1, M2),
**characterized in that**, outside the engine failure event (CPM), the value displayed by the screen (16) relating to the authorized margin (Ma), then called the limited margin (Ml), is the value of the authorized margin (Ma) reduced by a computer (17) by a predefined value, called the safety margin (Ms), on condition at least of a driving of the main rotor (1) at an NR speed, referred to as "low", controlled by the flight control unit (8) and identified below a predefined speed threshold for driving the main rotor, called the NR speed threshold (S), such that, in the engine failure event (CPM) and in the event of manoeuvring of the rotorcraft, prior to the engine failure event (CPM), at a drive NR speed of the main rotor (1) below the NR speed threshold (S), the pilot of the rotorcraft has a mechanical power reserve making it easier for the pilot to take action on the behaviour of the rotorcraft in order to re-establish control quickly over its progress, while avoiding any significant drop in the number of revolutions per second of rotation of the main rotor (1).
